# EUROPEAN PATENT SPECIFICATION

(11) **EP 0 757 070 B1**
(45) Date of publication and mention of the grant of the patent: **29.01.2003**
(21) Application number: 96202192.9
(22) Date of filing: 05.08.1996
(51) Int. Cl.: C08J 7/00, C08L 3/00

(54) **Method for manufacturing an article by injection moulding a starch product**
Verfahren zur Herstellung eines Gegenstandes durch Spritzgiessen eines Stärkeproduktes
Méthode de production d'un article par moulage par injection d'un produit d'amidon

(30) Priority: 04.08.1995 NL 1000936; 23.08.1995 NL 1001036
(43) Date of publication of application: 05.02.1997
(73) Proprietor: Coöperatieve Verkoop- en Productievereniging van Aardappelmeel en Derivaten 'AVEBE' B.A., NL-9641 JA Veendam (NL)
(72) Inventor: Gotlieb, Kornelis Fester, 9643 LC Veendam (NL); De Wit, Dick, 6721 ZK Bennekom (NL); Pluimers, Diane Trudy, 9403 PN Assen (NL); Feil, Herman, 6717 HH Ede (NL)
(74) Representative: Smulders, Theodorus A.H.J., Ir.

(56) References cited:
- EP-A- 0 118 240
- EP-A- 0 304 401
- WO-A-94/13734
- US-A- 4 839 450
- STARKE, vol. 46, no. 2, 1 February 1994, WEINHEIM DE, pages 52-59, XP000423600 H.POTENTE ET AL.: "Aufbereitung von Stärke mit verschiedenen Additiven auf Kunststoffverarbeitungsmaschinen."

## Description

The invention relates to the manufacture of articles by injection moulding starch products. The injection moulding of starch is known from EP-B-0 118 240 and EP-B-0 304 401. According to EP-B-0 118 240, starch is plasticized in the presence of water and optionally of additives at an elevated temperature and pressure to obtain a homogeneous melt. This melt is injected into a mould and the thus-moulded article, upon cooling to below its glass rubber transition temperature, is taken from the mould and is then ready for use.

EP-B-0 304 401 discloses a technique to be carried out in two steps, whereby first granules are formed by forcing starch, in the presence of water and optional additives, through an extruder, whereafter the extruded material is cooled and granulated. The granules obtained can be stored, transported, etc. and can thereafter be processed, often by a different company, into the desired articles according to the known injection moulding technique.

By injection moulding starch products, all kinds of articles of widely varying size can be manufactured, which can be used for a variety of applications, especially as packaging material. The point is that these articles have the advantage that they can be produced simply and cheaply, also because of the cheap raw materials, and further that they have sufficient strength for many applications and that they are biodegradable, so that after use they do no cause any harm to the environment.

It has been found, however, that articles that have been manufactured by injection moulding starch products are not properly resistant to the action of water and then warp or otherwise lose their dimensional stability, which entails a serious limitation of the range of applications for such articles, for instance as packaging material for water-containing liquid or more or less solid foods.

The principal object of the invention is to provide a method for improving the water resistance of articles manufactured by injection moulding starch products.

Further, the better water resistance can be achieved in a simple and cheap manner.

According to another object of the invention, articles manufactured by injection moulding a starch product are obtained which are better resistant to the action of water vapour, for instance to air humidity.

For achieving a better water resistance of an article that has been obtained by injection moulding a starch product, such article is treated, according to the invention, with an aqueous solution of an ammonium and/or magnesium sulphate or with a mixture of water and a water-miscible organic solvent. This treatment entails virtually no flocculation at the surface of the article.

The warp or other deformation of injection moulded articles from thermoplastic starch upon contact with water appears to be caused by the relaxation of stresses remaining behind during the manufacture of the article, especially in the outer part thereof. Due to the high pressure and the great forces during the injection moulding process, the starch molecules are stretched to a large extent and rendered subject to great tension. When the injection moulded article is then cooled, the cooling rate in the outer part of the article is greater than it is inside, so that more stress is, as it were, fixed or frozen in the outer part than inside. Probably, the stresses at the surface are the cause of the deficient water resistance of the articles of thermoplastic starch heretofore manufactured by injection moulding. These problems do not arise, for instance, when starch products are formed into articles through spinning. In specific extrusion techniques, such as tube extrusion, sheet extrusion and in film blow extrusion, by contrast, a certain improvement of the water resistance can also be observed when articles thus manufactured are afterwards subjected to a treatment with an aqueous solution or a mixture according to the invention.

As a result of the controlled treatment of the injection moulded article with an aqueous solution or a mixture according to the invention, the water resistance is considerably improved. The effects caused by the action of the water are twofold: on the one hand, the water provides a suitable medium for allowing relaxation of the stresses in the starch molecules in that the frozen condition is terminated, and on the other hand the aqueous environment enables the starch molecules to recrystallize to a greater or lesser extent. Both effects contribute to the envisaged improvement of the water resistance. The presence of ammonium sulphate, magnesium sulphate or a water-miscible organic solvent causes the article to absorb only little water during the treatment, so that flocculation at the surface of the articles is largely or practically completely avoided.

In Starch/Stärke 46 (1994), no. 2, pp. 52-59, compositions are described which mainly contain starch and in addition, in most cases, further contain urea and, in a number of cases, a copolymer of ethylene and acrylic acid (see "Tabelle 2" on p. 54). From those compositions, samples are manufactured by injection moulding, which samples are immersed in water to investigate their water resistance ("4.3 Wasserresistenz" on pp. 57-58).

According to the invention, eligible for use as starch is any starch, modified or not, that is plastically deformable at elevated temperature. Preferably, native starch is used, such as potato starch, but it is also possible to use chemically and/or enzymically converted or partially decomposed starch types, such as crosslinked starch, crosslinked or non-crosslinked starch ethers or starch esters, starch types partially decomposed chemically and/or enzymically, etc. The starch can be of any origin, for instance from potatoes, wheat, maize, waxy maize, etc. The term starch as used herein encompasses both native starch and modified starch types.

Starches by nature contain a certain amount of water and that water is of importance because it contributes as a natural plasticizer to the plastic deformability of the starch. In addition, preferably one or more supplementary plasticizers are used, such as glycerol, sorbitol, propylene glycol, (peta)erytritol or polyalkylene oxides with a low molecular weight. The added amount thereof is usually between 5 and 50% by weight, calculated on the starch product.

Further, it is advantageous to add so-called flow improvers, which are also referred to as lubricants and which effect a better processability in the thermoplastic condition. Through these, the fluidity or the flow behaviour during the thermoplastic deformation can be improved considerably, so that injection moulding requires less energy and qualitatively better articles can be manufactured.

Examples of suitable flow improvers are animal and vegetable oils and fats, preferably in hydrogenated form, and fatty acids as well as fatty acid derivatives such as mono and diglycerides or phosphatides. Castor oil and lecithin are examples of particularly suitable flow improvers or lubricants. The amount of flow improver in the starch product or the starch composition (these terms are synonymous in the description and claims) is usually at most 10% by weight.

According to a preferred embodiment of the invention, the starch is partly formed by a starch hydrolysate. Starch hydrolysates are starches which have been obtained by partially decomposing native or modified starch through chemical or enzymic hydrolysis for the purpose of obtaining a starch with a shorter chain and a correspondingly lower molecular weight. The extent of decomposition is represented by the dextrose equivalent (DE), unhydrolysed starch having a DE = 0 and completely hydrolysed starch having a DE = 100. According to the invention, preferably a starch hydrolysate with a DE <40 and more preferably with a DE in the range of 5 to 30 is used. Such starch hydrolysates are commercially available.

The use of starch hydrolysates as described above has a favourable effect on the starch composition to be thermoplastically deformed in the sense that the mobility or liquidity of this last is improved, so that the stresses resulting from the injection moulding process can more readily be carried off. As a result, the water resistance of the injection moulded article can sometimes even be improved considerably, so that the use of starch hydrolysates further enhances the effect of the invention. Preferably, the total starch comprises at most 40% by weight, and more preferably 10 to 30% by weight, of a starch hydrolysate with a DE <40. The use of starch hydrolysate, like the use of the above-discussed lubricants such as castor oil and lecithin, has the additional effect that often a smaller amount of plasticizer such as glycerol can be used. Accordingly, by the use of starch hydrolysate a more flexible total system is obtained, since it provides more possibilities of varying the components and the mutual ratio thereof, as a function of the eventual injection moulded product it is desired to manufacture.

Further, it has been found to be advantageous to include water-soluble salts in the starch product. Those salts can contribute to the prevention of flocculation at the surface of the injection moulded article when it is being treated in accordance with the invention, but their most important effect is to render the injection moulded articles better resistant to the action of water vapour, which is present, for instance, in the ambient air. So, the moisture resistance is improved. This effect is clearly distinct from the better water resistance obtainable through the present treatment and can also be achieved, through the measure mentioned, i.e. through the inclusion of water-soluble salts in the starch product, in an injection moulded product which has not been subjected to the present treatment. The fact is that the presence of salts has a binding effect on water, so that the article has a lesser tendency to deform under the action of air humidity. Water-soluble salts that can be included in the starch product are preferably inorganic salts, in particular ammonium sulphate and/or magnesium sulphate. The amount of salt is fairly large and is generally 5 to 30% by weight, calculated on the starch product.

Other useful substances that can be included in the starch composition or the starch product are fillers, such as lime, chalk, silicon oxide, magnesium oxide, etc., but in particular also organic fillers and specifically organic biodegradable reinforcing natural fibrous materials, such as cellulose fibers, cotton, etc. Fillers have a material-saving and a reinforcing effect and natural fiber materials have a further advantage in that they do not leave any harmful residues when after use the injection moulded article is discarded as waste. In general, fillers and in particular reinforcing fibrous material are used in an amount of at most 50% by weight.

As stated earlier, the injection moulded article can be manufactured in one as well as in two steps. In both cases the starch chosen and additives, if any, for instance as specified above, are mixed with each other in the desired mutual ratios to form a relatively homogeneous starch composition. By starch product as used herein is meant the starch composition that is intended to be processed into an article through injection moulding, that is, including additives such as plasticizers, flow improvers, salts, fillers, etc. The ratios of the various components should obviously be chosen so that in effect a mixture is obtained that is thermoplastically deformable under the temperature and pressure conditions used in the injection moulding. Further, due account should also be taken of the desired fluidity, strength, water resistance, moisture resistance, etc. Mixing can be performed in any suitable mixing device and the mixture obtained is then, in the first case, supplied directly to an injection moulding machine, where the mixture first turns into a melt, which is injected into a mould, whereafter the article is taken from the mould after it has cooled to below its glass rubber transition temperature. In the second case, the mixture is pressed through an extruder and the extruded material is cooled and granulated. The granules can then be used as a feed for feeding the injection moulding machine, optionally much later and at another company. The mixing of the components can also take place directly in the injection moulding machine or in the extruder.

After the article has been manufactured by injection moulding as described above, it possesses, as stated, a water resistance that is insufficient for numerous applications. Presently, in accordance with the invention, the water resistance is considerably improved by treating the article for some time with an aqueous solution of ammonium sulphate and/or magnesium sulphate or with a mixture of water and a water-miscible organic solvent. For a proper action, it is of importance to use a fairly concentrated aqueous solution of ammonium or magnesium sulphate, and best results are achieved with a saturated solution. Also eligible for use are mixtures of water and water-miscible organic solvents, such as lower alcohols, in particular ethanol. The mixing ratio can easily be determined by the skilled person. In the case of ethanol, the volume ratio of water to ethanol is preferably in the range of 10/90 to 90/10 and most preferably in the range of 40/60 to 70/30.

It has further been found, as already discussed earlier, that the inclusion of particular inorganic salts as mentioned above in the starch composition itself also has a favourable effect on the prevention of flocculation or the limitation of the water absorption during the present treatment. This treatment can then be carried out in a shorter time. It is noted, however, that the present treatment could not be dispensed with by incorporating salts in the starch composition.

The treatment of the article obtained by injection moulding with water in which a specific inorganic salt or a water-miscible solvent is included, as described earlier, can be carried out in various ways. Preferably, the article is immersed in the aqueous treatment liquid, so that a uniform wetting is obtained. During the immersion the article can be moved in the treatment liquid and/or this last can be stirred. The temperature at which the treatment is carried out is not particularly critical. Usually, work proceeds at room temperature, but a slightly lower temperature also gives good results, while a slightly increased temperature of, for instance, 30-50°C accelerates the process in the sense that the better water resistance envisaged is achieved faster. The duration of the treatment can vary strongly, depending *inter alia* on the means used to prevent flocculation, the conditions under which the treament is carried out and the desired extent of improvement of the water resistance. In general, however, the duration of the treatment is between 1 and 90 minutes.

After the article has been treated in the manner described hereinabove, it can optionally be wiped dry or it can simply be allowed to dry and thus the treatment can be concluded. It has been found, however, that a short concluding treatment with water for, for instance, 1 to 60 seconds, for instance by rinsing the article with water, can yield a further improvement of the intended better water resistance, especially when the treatment time with the aqueous treatment liquid according to the invention is chosen to be fairly short, for instance shorter than about 15 minutes. While the first treatment apparently causes the relief of stresses present in the injection moulded article, the second treatment, i.e. just rinsing with water for a short time, enables a certain extent of recrystallization to occur. Both effects appear to contribute to the improved water resistance contemplated according to the invention.

The improved water resistance of articles obtained according to the invention can be determined with various tests. Thus, the water absorption can be determined after the articles have been immersed in water for certain periods of time. Further, it can be determined when the article breaks when it is subjected to load in water. According to another test method it is determined how deep an aqueous ink penetrates into the article in a particular period of time. These test methods all serve to determine to what extent the water resistance has been improved through the method according to the invention. Preferably, the treatment with an aqueous treatment liquid according to the invention is carried out in such a manner that the water absorption by the treated article, when it is immersed in water for one hour at room temperature, is at most 50% by weight and most preferably at most 30% by weight.

The articles obtained according to the invention, because of their high water resistance, are better resistant to warp or loss of their original shape than are articles which have not been afterwards treated by the present method. They are therefore better suited as packaging material or for any other application where the articles come or may come into contact with water and it is of importance that they then retain their original shape as well as possible. To be mentioned as examples of such applications are: dishes, trays and cups in which aqueous liquids or more or less wet solid substances are preserved, packaging material that can come into contact with an aqueous environment for a limited time, etc. After use, the articles can easily be biologically decomposed without leaving harmful residues. So they are environment-friendly.

The invention will be further explained in and by the following examples.

### Example 1

118 parts by weight of potato starch (20% moisture), 20 parts by weight of glycerol, 3 parts by weight of lecithin and 8 parts by weight of chalk are mixed with each other and extruded in an extruder of the type Werner & Pfleiderer Continua 58, the temperature profile of the extruder being as follows:
70/110/100/80°C. The extruded material is granulated and dried to a moisture content of 8%.

Next, the extruded material is injection moulded in an injection moulding machine Demag D60 NCIII-K, which is equipped with a standard screw. The mould temperature is 20°C and the temperature profile over the barrel is as follows:
----------------------------170/180/180/180°C. In this way test rods are injection moulded according to DIN 23167.

For determining water absorption, a test rod is immersed in water for a particular time (60 minutes) and then dried and weighed. From the weight increase the water absorption in percent by weight is calculated (test 1).

In a manner analogous to that described above, further tests are carried out, in which in a number of cases additionally 20 parts by weight of magnesium sulphate are added to the extruder (tests 2 and 8) and in a number of cases the test rods obtained are first treated (immersed) in an aqueous liquid of the composition specified below, for the period of time specified below (tests 3-8) before the water absorption is determined. A review of all these tests and of the results obtained is represented in the table below.

**TABLE**

| Test No. | Further test conditions | Water Absorption | Immersing Time |
|---|---|---|---|
| 1 | no treatment in aqueous liquid | 130% | 60 min |
| 2 | magnesium sulphate in mixture; no treatment in aqueous liquid | 100% | 60 min |
| 3 | as 1 + 5 min treatment with saturated aqueous ammonium sulphate solution | 30% | 60 min |
| 4 | as 1 + 60 min treatment with saturated aqueous ammonium sulphate solution | 15% | 60 min |
| 5 | as 1 + 5 min treatment with saturated aqueous magnesium sulphate solution | 20% | 60 min |
| 6 | as 1 + 60 min treatment with saturated aqueous magnesium sulphate solution | 15% | 60 min |
| 7 | as 1 + 5 min treatment with ethanol/water (1/4 in volume) | 30% | 60 min |
| 8 | as 2 + 10 min treatment with saturated aqueous ammonium sulphate solution | 22% | 60 min |

From the above-represented test results it appears that, given a short treatment time, a saturated magnesium sulphate solution is more effective than a saturated ammonium sulphate solution (compare test 5 with test 3) and that the additional presence of magnesium sulphate in the mass of the test rod promotes the effectiveness of the treatment with a saturated ammonium sulphate solution (compare test 8 with tests 3 and 4).

### Example 2

In a manner analogous to that described in Example 1, test 1, 7 test rods are made. Six test rods are then treated with a saturated aqueous solution of ammonium sulphate and of magnesium sulphate, respectively, for 1 minute, 5 minutes and 60 minutes.

The six test rods thus treated and the untreated test rod are then subjected to a test for determining their resistance in contact with water under a constant load. To that end, the test rods are vertically suspended in a water bath of 20°C, half immersed therein. Clamped to the lower end of the rods is a weight of 2 kg. Then the yield time is determined, i.e. the point in time when the test rods breaks in two.

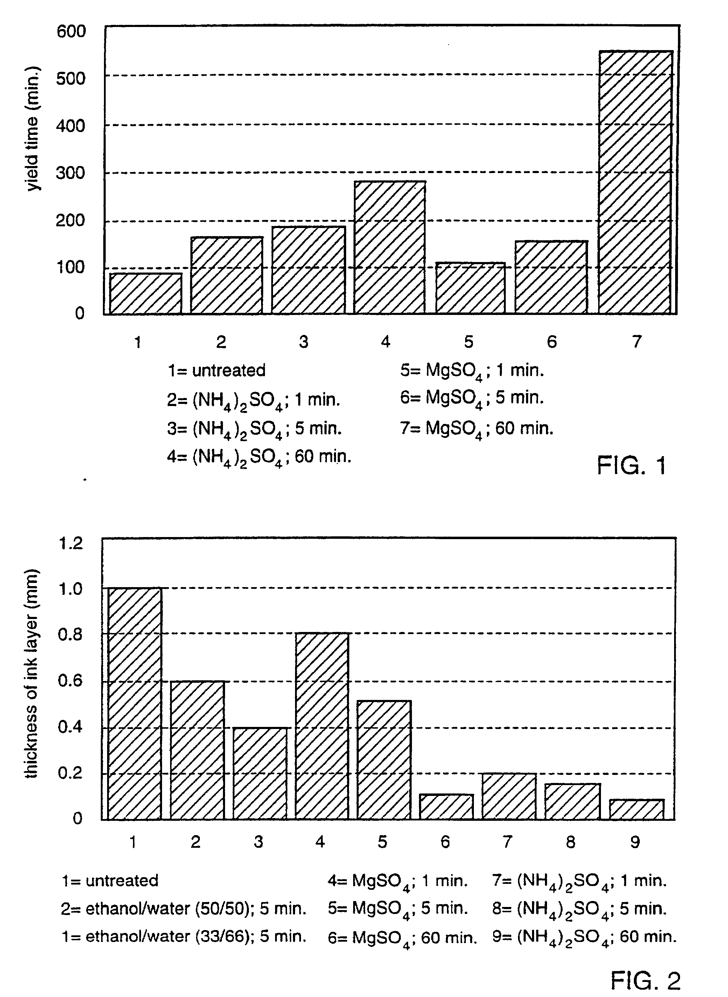

The results obtained are represented in Fig. 1. Strikingly, a treatment of 60 minutes with a saturated aqueous solution of magnesium sulphate results in a very long yield time.

### Example 3

In a manner analogous to that described in Example 1, test 1, 9 test rods are made. One test rod is not treated, two test rods are treated with a mixture of ethanol and water for 5 minutes and 6 test rods are treated with a saturated aqueous solution of ammonium sulphate and of magnesium sulphate, respectively, for 1 minute, 5 minutes and 60 minutes.

Then the 9 test rods are immersed for 5 minutes in an aqueous ink solution and the thickness of the ink layer or the depth of ink penetration is determined.

The results obtained are represented in Fig. 2. Strikingly, in particular a treatment with a saturated aqueous solution of ammonium sulphate is particularly effective towards preventing absorption of an aqueous ink.

### Example 4

In a manner analogous to that described in Example 1, test 1, test rods are made. A number of test rods are treated with a saturated aqueous solution of magnesium sulphate for different periods of time, and this treatment may or may not be followed by a treatment with water for 1 second. Other test rods are treated with a saturated aqueous solution of ammonium sulphate, likewise for different periods of time and likewise followed or not followed by a treatment with water for 1 second. Yet other test rods are treated for 5 minutes with different mixtures of ethanol and water.

The test rods are then immersed in water and the weight increase (= the water absorption) is determined as described in Example 1 after different immersing times.

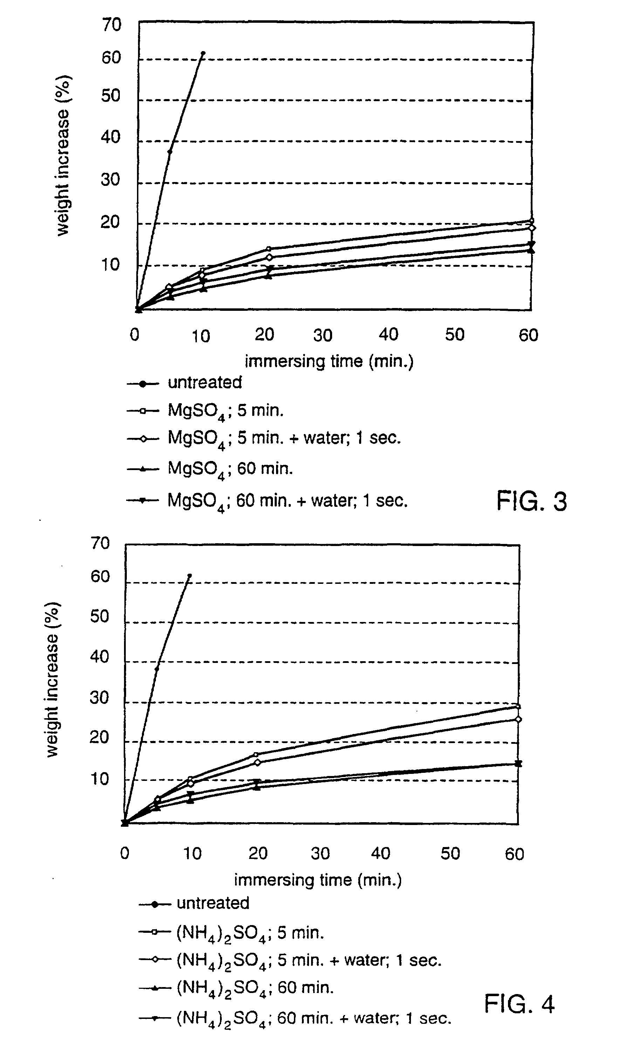

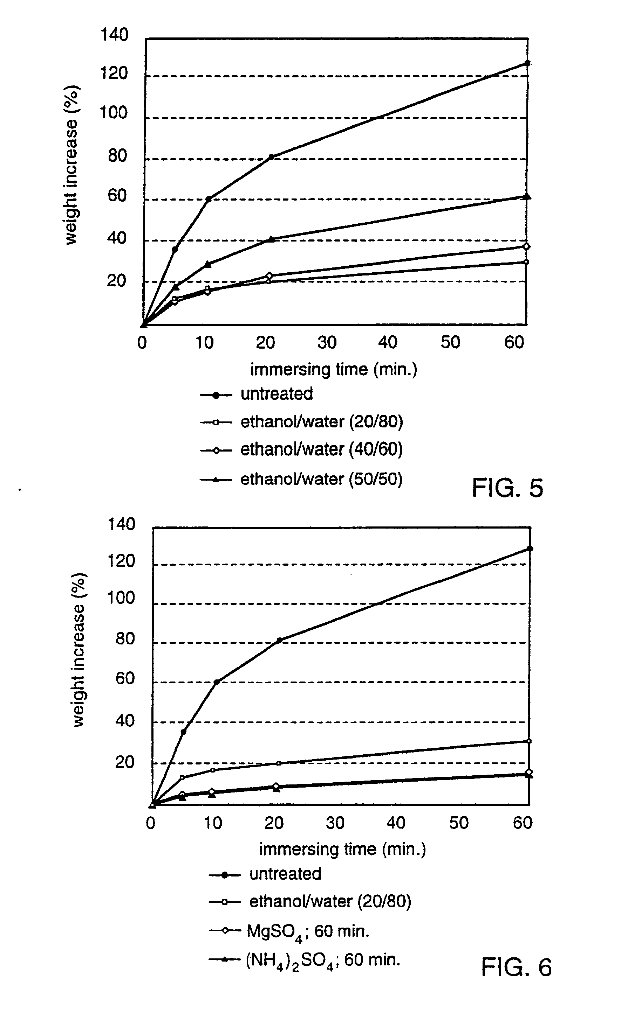

The results obtained are represented in Figs. 3-6, the best results having been gathered in Fig. 6 and compared there with the weight increase (= water absorption) of a test rod which has not been subjected to any treatment. The magnitude of the improvement obtained according to the invention is staggering.

## Claims

1. A method for manufacturing an article by injection moulding a starch product, whereafter the water resistance of the article obtained is improved by treating it with an aqueous solution of ammonium sulphate and/or magnesium sulphate or with a mixture of water and a water-miscible organic solvent.

2. A method according to claim 1, **characterized in that** the article is treated with a saturated solution of ammonium sulphate and/or magnesium sulphate.

3. A method according to claim 1, **characterized in that** the article is treated with a mixture of water and ethanol in a volume ratio of 10/90 - 90/10.

4. A method according to claims 1-3, **characterized in that** the time of treatment of the article is between 1 and 90 minutes.

5. A method according to claims 1-4, **characterized in that** upon the described treatment, a post-treatment with water is carried out for 1 to 60 seconds.

6. A method according to claims 1-5, **characterized in that** a salt is included in the starch product.

7. A method according to claim 6, **characterized in that** ammonium sulphate and/or magnesium sulphate is included in the starch product in an amount of 5 to 30% by weight.

8. A method according to claims 1-7, **characterized in that** a supplementary plasticizer is included in the starch product in an amount of 5 to 50% by weight.

9. A method according to claims 1-8, **characterized in that** furthermore a flow improver such as castor oil or lecithin is included in the starch product in an amount of at most 10% by weight.

10. A method according to claims 1-9, **characterized in that** the starch product comprises at most 40% by weight and preferably 10-30% by weight of a starch hydrolysate with a DE <40, preferably with a DE in the range of 5 to 30.

11. A method according to claims 1-10, **characterized in that** furthermore a reinforcing natural fibrous material is included in the starch product in an amount of at most 50% by weight.

12. A method according to claims 1-11, **characterized in that** the starch product consists wholly or largely of native potato starch or, in the case of a starch hydrolysate, has been derived therefrom.

## Patentansprüche

1. Verfahren zur Herstellung eines Artikels durch Spritzgießen eines Stärkeprodukts, wonach die Wasserfestigkeit des erhaltenen Artikels verbessert wird, indem dieser mit einer wäßrigen Lösung von Ammoniumsulfat und/oder Magnesiumsulfat oder mit einer Mischung aus Wasser und einem mit Wasser mischbaren organischen Lösemittel behandelt wird.

2. Verfahren nach Anspruch 1, **dadurch gekennzeichnet, daß** der Artikel mit einer gesättigten Lösung aus Ammoniumsulfat und/oder Magnesiumsulfat behandelt wird.

3. Verfahren nach Anspruch 1, **dadurch gekennzeichnet, daß** der Artikel mit einer Mischung aus Wasser und Ethanol in einem Volumenverhältnis von 10/90 - 90/10 behandelt wird.

4. Verfahren nach den Ansprüchen 1-3, **dadurch gekennzeichnet, daß** die Behandlungsdauer des Artikels zwischen 1 und 90 Minuten liegt.

5. Verfahren nach den Ansprüchen 1-4, **dadurch gekennzeichnet, daß** bei der beschriebenen Behandlung eine Nachbehandlung mit Wasser für 1 bis 60 Sekunden erfolgt.

6. Verfahren nach den Ansprüchen 1-5, **dadurch gekennzeichnet, daß** in dem Stärkeprodukt ein Salz enthalten ist.

7. Verfahren nach Anspruch 6, **dadurch gekennzeichnet, daß** Ammoniumsulfat und/oder Magnesiumsulfat in dem Stärkeprodukt in einem Menge von 5 bis 30 Gewichtsprozent enthalten ist.

8. Verfahren nach den Ansprüchen 1-7, **dadurch gekennzeichnet, daß** zusätzlicher Weichmacher in dem Stärkeprodukt in einer Menge von 5 bis 50 Gewichtsprozent vorhanden ist.

9. Verfahren nach den Ansprüchen 1-8, **dadurch gekennzeichnet, daß** ferner ein Fließverbesserungsmittel wie Biberöl oder Lecithin im Stärkeprodukt in einer Menge von höchstens 10 Gewichtsprozent enthalten ist.

10. Verfahren nach den Ansprüchen 1-9, **dadurch gekennzeichnet, daß** das Stärkeprodukt höchstens 40 Gewichtsprozent und vorzugsweise 10-30 Gewichtsprozent eines Stärkehydrolysats mit einem DE <40, vorzugsweise mit einem DE im Bereich von 5 bis 30, aufweist.

11. Verfahren nach den Ansprüchen 1-10, **dadurch gekennzeichnet, daß** ferner ein verstärkendes Naturfasematerial im Stärkeprodukt in einer Menge von höchstens 50 Gewichtsprozent enthalten ist.

12. Verfahren nach den Ansprüchen 1-11, **dadurch gekennzeichnet, daß** das Stärkeprodukt vollständig oder größtenteils aus nativer Kartoffelstärke besteht oder, im Falle eines Stärkehydrolysats, daraus abgeleitet ist.

## Revendications

1. Procédé de fabrication d'un article par moulage par injection d'un produit amylacé, après quoi la résistance à l'eau de l'article obtenu est améliorée par traitement avec une solution aqueuse de sulfate d'ammonium et/ou de sulfate de magnésium ou avec un mélange d'eau et d'un solvant organique miscible dans l'eau.

2. Procédé selon la revendication 1, **caractérisé en ce que** l'article est traité avec une solution saturée de sulfate d'ammonium et/ou de sulfate de magnésium.

3. Procédé selon la revendication 1, **caractérisé en ce que** l'article est traité avec un mélange d'eau et d'éthanol dans un rapport des volumes compris entre 10:90 et 90:10.

4. Procédé selon les revendications 1 à 3, **caractérisé en ce que** le temps de traitement de l'article est compris entre 1 et 90 minutes.

5. Procédé selon les revendications 1 à 4, **caractérisé en ce qu'**après le traitement décrit, un traitement postérieur avec de l'eau est réalisé pendant 1 à 60 secondes.

6. Procédé selon les revendications 1 à 5, **caractérisé en ce qu'**un sel est inclus dans le produit amylacé.

7. Procédé selon la revendication 6, **caractérisé en ce que** du sulfate d'ammonium et/ou du sulfate de magnésium est inclus dans le produit amylacé en quantité comprise entre 5 et 30 % en poids.

8. Procédé selon les revendications 1 à 7, **caractérisé en ce qu'**un plastifiant supplémentaire est inclus dans le produit amylacé en quantité comprise entre 5 et 50 % en poids.

9. Procédé selon les revendications 1 à 8, **caractérisé en ce que** par ailleuxs, un fluidifiant tel que l'huile de ricin ou la lécithine est inclus dans le produit amylacé en quantité inférieure ou égale à 10 % en poids.

10. Procédé selon les revendications 1 à 9, **caractérisé en ce que** le produit amylacé comprend une quantité inférieure ou égale à 40 % en poids et de préférence une quantité comprise entre 10 et 30 % en poids d'un hydrolysât d'amidon avec un DE<40, de préférence avec un DE compris entre 5 et 30.

11. Procédé selon les revendications 1 à 10, **caractérisé en ce que** par ailleurs un matériau fibreux naturel de renforcement est inclus dans le produit amylacé en quantité inférieure ou égale à 50 % en poids.

12. Procédé selon les revendications 1 à 11, **caractérisé en ce que** le produit amylacé est constitué entièrement ou pour une grande part de fécule de pomme de terre native ou, dans le cas d'un hydrolysât d'amidon, est dérivé de celui-ci.
